# EUROPEAN PATENT SPECIFICATION

(11) **EP 4 361 598 B1**
(45) Date of publication and mention of the grant of the patent: **18.11.2026**
(21) Application number: 22827885.9
(22) Date of filing: 13.01.2022
(51) Int. Cl.: G01N 15/14, G06N 20/00, G01N 21/64, G01N 15/1429, G06N 3/09, G01N 15/10

(54) **PARTICLE ANALYSIS SYSTEM**
PARTIKELANALYSESYSTEM
SYSTÈME D'ANALYSE DE PARTICULES

(30) Priority: 23.06.2021 JP 2021103918
(43) Date of publication of application: 01.05.2024
(60) Divisional application: 26205807.6 / 4 835 441
(73) Proprietor: Sony Group Corporation, Tokyo 108-0075 (JP)
(72) Inventor: YAMAMOTO, Shota, Tokyo 108-0075 (JP); KATO, Yasunobu, Tokyo 108-0075 (JP); YANASHITA, Yudai, Tokyo 108-0075 (JP); YAMANE, Kenji, Tokyo 108-0075 (JP)
(74) Representative: D Young & Co LLP
(86) International application number: PCT/JP2022/000904
(87) International publication number: WO 2022/269960

(56) References cited:
- WO-A1-2018/198586
- WO-A1-2019/241443
- WO-A1-2020/241722
- JP-A- 2018 005 640
- JP-A- 2019 028 746
- JP-A- 2020 149 498
- JP-A- 2020 193 877
- JP-A- 2021 005 191
- MATTHEW AMODIO ET AL: "Exploring Single-Cell Data with Deep Multitasking Neural Networks", BIORXIV, 3 January 2019 (2019-01-03), pages 1 - 52, XP055696058, Retrieved from the Internet <URL:https://www.biorxiv.org/content/10.1101/237065v4> [retrieved on 20241129], DOI: 10.1101/237065
- SHIMA KEISUKE, TAKATA DAISUKE, BU NAN, TSUJI TOSHIO: "A Recurrent Probabilistic Neural Network with Dimensional Reduction and Its Application to Time Series EEG Discrmination", TRANSACTIONS OF THE SOCIETY OF INSTRUMENT AND CONTROL ENGINEERS, KEISOKU JIDO SEIGYO GAKKAI, TOKYO, JP, vol. 48, no. 4, 1 January 2012 (2012-01-01), JP , pages 199 - 206, XP055781392, ISSN: 0453-4654, DOI: 10.9746/sicetr.48.199

## Description

### TECHNICAL FIELD

The present disclosure relates to a particle analysis system, an information processing apparatus, and a sorting apparatus.

### BACKGROUND ART

In recent years, prompt analysis of characteristics of a large number of particles using a flow cytometer has been performed in a field of medicine or biochemistry. Furthermore, in the field of medicine or biochemistry, an internal structure and dynamics of cells or tissues have been analyzed by measuring the cells or tissues stained with a plurality of fluorescent dyes by a fluorescence microscope.

In such an analysis apparatus such as a flow cytometer and a fluorescence microscope, for example, fluorescence from a plurality of fluorescent dyes is dispersed by a prism and the like, and the dispersed fluorescence is detected by a light receiving element array in which a plurality of light receiving elements having different detection wavelength regions is arranged. Therefore, measurement data obtained by the analysis apparatus such as the flow cytometer and the fluorescence microscope is multidimensional data including detection values in the plurality of light receiving elements.

For example, Patent Document 1 below discloses a technique for analyzing multidimensional data measured by a flow cytometer at a higher speed in order to quickly determine whether or not a cell is a sorting target.

### CITATION LIST

### PATENT DOCUMENT

Patent Document 5: WO 2020/241722
Other cited references include Matthew Amodio ET AL: "Exploring Single-Cell Data with Deep Multitasking Neural Networks", bioRxiv, 3 January 2019, pages 1-52.

### SUMMARY OF THE INVENTION

### PROBLEMS TO BE SOLVED BY THE INVENTION

However, since the technique disclosed in Patent Document 1 described above focuses on determining whether or not the cell is the sorting target, it is difficult to obtain an analysis result of an entire measured sample with high reproducibility. Therefore, in the technique disclosed in Patent Document 1 described above, for example, it is difficult to compare the presence or absence or a difference in distribution of a cell population between samples.

Therefore, the present disclosure proposes a novel and improved particle analysis system, information processing apparatus, and sorting apparatus capable of obtaining an analysis result with high reproducibility from multidimensional data.

### SOLUTIONS TO PROBLEMS

The invention is defined by the claims.

### BRIEF DESCRIPTION OF DRAWINGS

Fig. 1 is a schematic diagram schematically illustrating a configuration of a flow cytometer.
Fig. 2 is a block diagram illustrating a functional configuration of an information processing apparatus according to a first embodiment of the present disclosure.
Fig. 3 is an explanatory diagram illustrating an example of multidimensional data and dimensionally compressed data.
Fig. 4 is an explanatory diagram illustrating an example of a learning model constructed by a learning unit.
Fig. 5 is a flowchart illustrating an example of an operation flow of the information processing apparatus according to the same embodiment.
Fig. 6 is a graph illustrating a result of plotting dimensionally compressed data by UMAP on a two-dimensional coordinate space in an example of the same embodiment.
Fig. 7 is a graph illustrating a result of plotting dimensionally compressed data obtained by inputting multidimensional data used for machine learning to a learning model on a two-dimensional coordinate space in the example of the same embodiment.
Fig. 8 is a graph illustrating a result of plotting dimensionally compressed data obtained by inputting other measurement data of the same sample to a learning model on a two-dimensional coordinate space in the example of the same embodiment.
Fig. 9 is a block diagram illustrating a functional configuration of an information processing apparatus according to a second embodiment of the present disclosure.
Fig. 10 is a flowchart illustrating an example of an operation flow of the information processing apparatus according to the same embodiment.
Fig. 11 is a graph illustrating a result of plotting dimensionally compressed data obtained by inputting multidimensional data to a learning model on a two-dimensional coordinate space in an example of the same embodiment.
Fig. 12 is an explanatory diagram illustrating a result of comparing dimensionally compressed data estimated using a learning model between samples in the example of the same embodiment.
Fig. 13 is an explanatory diagram illustrating a result of comparing dimensionally compressed data by UMAP between samples in the example of the same embodiment.
Fig. 14 is a block diagram illustrating a functional configuration of a particle analysis system according to a third embodiment of the present disclosure.
Fig. 15 is a flowchart illustrating an example of an operation flow of the particle analysis system according to the same embodiment.
Fig. 16 is a schematic diagram illustrating a schematic configuration of a fluorescence imaging apparatus.
Fig. 17 is a block diagram illustrating a hardware configuration example of the information processing apparatus according to first to third embodiments of the present disclosure.

### MODE FOR CARRYING OUT THE INVENTION

Preferred embodiments of the present disclosure are hereinafter described in detail with reference to the accompanying drawings. Note that, in the present specification and the drawings, components having substantially the same functional configuration are denoted using the same reference numerals, and redundant descriptions are omitted.

Note that the description will be given in the following order.
1. First embodiment
   1.1. Overview of flow cytometer
   1.2. Configuration example of information processing apparatus
   1.3. Operation example of information processing apparatus
   1.4. Example of dimensionally compressed data
2. Second embodiment
   2.1. Configuration example of information processing apparatus
   2.2. Operation example of information processing apparatus
   2.3. Example of dimensionally compressed data
3. Third embodiment
   3.1. Configuration example of particle analysis system
   3.2. Operation example of particle analysis system
4. Modifications
5. Hardware configuration example

### <1. First embodiment>

### (1.1. Overview of flow cytometer)

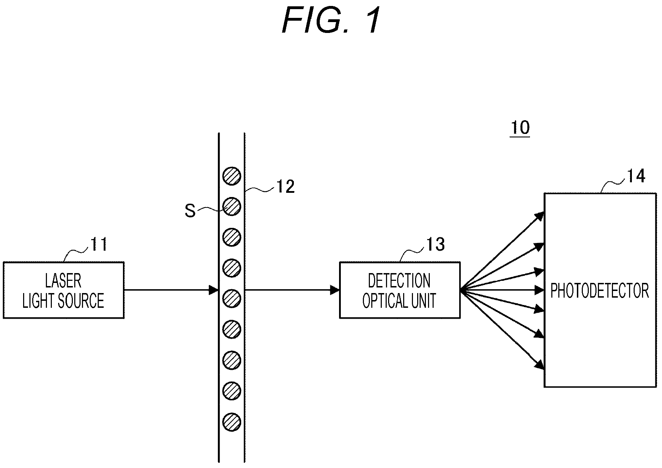

First, an overview of a flow cytometer to which the technology according to the present disclosure is applied will be described with reference to Fig. 1. Fig. 1 is a schematic diagram schematically illustrating a configuration of a flow cytometer 10.

As illustrated in Fig. 1, the flow cytometer 10 includes a laser light source 11, a flow cell 12, a detection optical unit 13, and a photodetector 14.

The flow cytometer 10 is an analysis apparatus that irradiates a measurement target S flowing through the flow cell 12 at a high speed with laser light from the laser light source 11 to detect fluorescence and the like emitted from each measurement target S by the photodetector 14.

The measurement target S is, for example, a biologically derived particle such as a cell, a tissue, a microorganism, or a bio-related particle stained with a plurality of fluorescent dyes. The cell is, for example, an animal cell (a hematopoietic cell), a plant cell, or the like. The tissue is, for example, a tissue collected from a human body and the like, or a part of the tissue (including a tissue cell). The microorganism is, for example, bacteria such as Escherichia coli, viruses such as tobacco mosaic virus, fungi such as yeast. The bio-related particle is, for example, various organelles (minute organs) such as chromosomes, liposomes, or mitochondria constituting a cell, or a bio-related polymer such as nucleic acid, protein, lipid, a sugar chain, or complexes thereof. These biologically derived particles may have either a spherical or non-spherical shape, and a size or mass is not particularly limited.

Furthermore, the measurement target S may be artificial particles such as latex particles, gel particles, or industrial particles. For example, the industrial particles may be: organic resin particles such as polystyrene or polymethyl methacrylate; inorganic material particles such as glass, silica, or a magnetic body; or metal particles such as gold colloid or aluminum. Similarly, these artificial particles may have either a spherical or non-spherical shape, and a size or mass is not particularly limited.

The measurement target S is stained (labeled) with a plurality of fluorescent dyes in advance. The labeling of the measurement target S with the fluorescent dye may be performed by a known method. Specifically, in a case where the measurement target S is a cell, fluorescent labeling to the cell can be performed by mixing the cell of the measurement target S with a fluorescent-labeled antibody that selectively binds to an antigen present on a cell surface, and binding the fluorescent-labeled antibody to the antigen on the cell surface by an antigen-antibody reaction. Furthermore, the fluorescent labeling to the cell can also be performed by mixing the cell of the measurement target S with a fluorescent dye to be selectively taken into a specific cell, and allowing the cell to take up the fluorescent dye.

The fluorescent-labeled antibody is an antibody to which a fluorescent dye is bound as a label. For example, the fluorescent-labeled antibody may be obtained by directly binding a fluorescent dye to an antibody, or may be obtained by binding a fluorescent dye to a biotin-labeled antibody via avidin using an avidin-biotin reaction. The antibody may be either a polyclonal antibody or a monoclonal antibody. As the fluorescent dye, a known dye used for cell staining and the like can be arbitrarily used.

The laser light source 11 emits, for example, laser light having a wavelength capable of exciting a fluorescent dye that has stained (labeled) the measurement target S. In a case where a plurality of fluorescent dyes is used for dyeing the measurement target S, a plurality of laser light sources 11 may be provided so that laser light corresponding to an excitation wavelength of each of the plurality of fluorescent dyes can be emitted. For example, the laser light source 11 may be a semiconductor laser light source. The laser light emitted from the laser light source 11 may be pulse light or continuous light.

The flow cell 12 is a flow path that allows the measurement targets S such as cells to be aligned and flow in one direction. Specifically, the flow cell 12 can cause the measurement targets S to be aligned and flow in one direction by causing sheath liquid enclosing sample liquid containing the measurement targets S to flow as a laminar flow at a high speed. The measurement target S flowing through the flow cell 12 is irradiated with laser light emitted from the laser light source 11. Fluorescence emitted from the measurement target S irradiated with the laser light passes through the detection optical unit 13 and is then detected by the photodetector 14.

The detection optical unit 13 is an optical element that causes light in a predetermined detection wavelength region among the light emitted from the measurement target S irradiated with the laser light to reach the photodetector 14. The detection optical unit 13 may be, for example, a spectroscopic element such as a prism or a grating capable of obtaining a spectrum by dispersing incident light.

Alternatively, the detection optical unit 13 may be an optical element that separates fluorescence emitted from the measurement target S irradiated with the laser light for every predetermined detection wavelength region. In such a case, the detection optical unit 13 includes, for example, at least one or more dichroic mirrors or optical filters, and can separate fluorescence from the measurement target S into light in a predetermined detection wavelength region by an optical member such as a dichroic mirror, an optical filter, and the like. Accordingly, the detection optical unit 13 can cause the separated light of the predetermined detection wavelength region to reach the corresponding photodetector 14.

The photodetector 14 includes a light receiving element group that detects fluorescence emitted from the measurement target S irradiated with the laser light. The light receiving element group may be, for example, a light receiving element array in which a plurality of light receiving elements such as a photomultiplier tube (PMT) or a photodiode having different detectable wavelength regions of light is one-dimensionally arranged along a light separation direction by the detection optical unit 13.

Alternatively, the photodetector 14 may include, for example, a plurality of light receiving elements that receives light corresponding to the wavelength region of the fluorescent dye separated by the detection optical unit 13. Moreover, the photodetector 14 may include an imaging element such as a CCD image sensor or a CMOS image sensor, for example. In such a case, the photodetector 14 can acquire an image (for example, a bright-field image, a dark-field image, a fluorescence image, or the like) of the measurement target S by the imaging element.

In the flow cytometer 10 having the configuration described above, first, the measurement target S flowing through the flow cell 12 at a high speed is irradiated with laser light from the laser light source 11, and fluorescence is emitted from the measurement target S. Therefore, the fluorescence emitted from the measurement target S is separated by the detection optical unit 13 and then detected by the photodetector 14. In the photodetector 14, the fluorescence emitted from the measurement target S is detected by each of the plurality of light receiving elements having different detectable wavelength regions of light. With this arrangement, the flow cytometer 10 can acquire multidimensional data including fluorescence intensity of a fluorescent substance labeling the measurement target S from the measurement target S.

### (1.2. Configuration example of information processing apparatus)

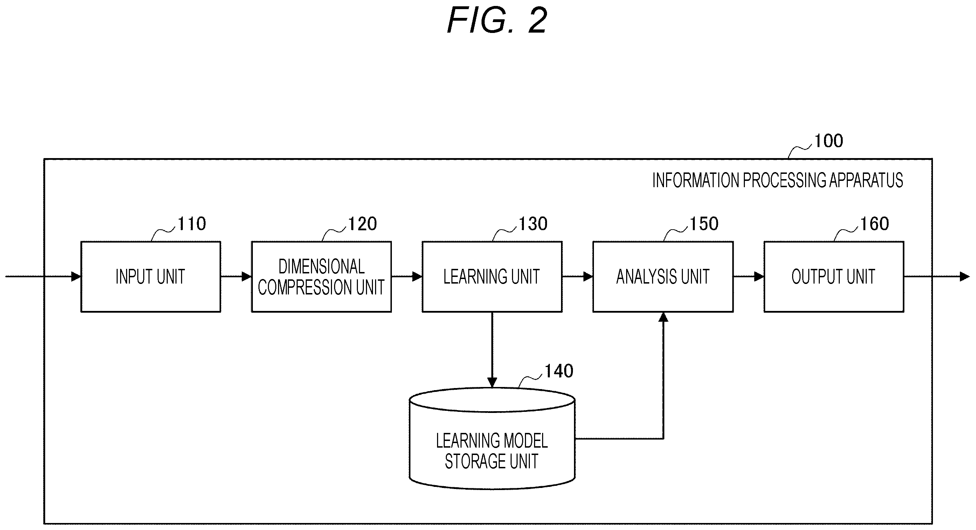

Next, an information processing apparatus according to a first embodiment of the present disclosure will be described with reference to Fig. 2. Fig. 2 is a block diagram illustrating the functional configuration of an information processing apparatus 100 according to the present embodiment.

The information processing apparatus 100 according to the present embodiment can generate lower-dimensional dimensionally compressed data using multidimensional data obtained by the flow cytometer 10 and the like. With this arrangement, the information processing apparatus 100 can convert the multidimensional data obtained by the flow cytometer 10 and the like into dimensionally compressed data that is more easily visually recognized or analyzed, and present the dimensionally compressed data to a user.

As illustrated in Fig. 2, the information processing apparatus 100 includes, for example, an input unit 110, a dimensional compression unit 120, a learning unit 130, a learning model storage unit 140, an analysis unit 150, and an output unit 160.

The input unit 110 is an input port for inputting multidimensional data to the information processing apparatus 100. Specifically, the input unit 110 is a connection port capable of receiving various data from an external device such as the flow cytometer 10 and the like. For example, the input unit 110 may be a universal serial bus (USB) port, an IEEE 1394 port, a small computer system interface (SCSI) port, or the like.

The multidimensional data input to the input unit 110 may include, for example, data related to light intensity received by each light receiving element included in the photodetector 14 of the flow cytometer 10. For example, the multidimensional data input to the input unit 110 may be light intensity data obtained by correcting (that is, fluorescence correcting) overlapping of fluorescence wavelength regions of fluorescent dyes from the light intensities received by the light receiving elements and then performing normalization processing. Furthermore, the multidimensional data input to the input unit 110 may be raw data of the light intensity received by each light receiving element.

Alternatively, the multidimensional data input to the input unit 110 may include data regarding fluorescence intensity from each fluorescent dye calculated by analyzing a fluorescence spectrum measured by the light receiving element array. For example, the multidimensional data input to the input unit 110 may be fluorescence intensity data of each fluorescent dye subjected to normalization processing after being separated from each other in consideration of fluorescence wavelength regions of fluorescent dyes from the fluorescence spectrum measured by the light receiving element array. Furthermore, the multidimensional data input to the input unit 110 may be raw data of the fluorescence spectrum measured by the light receiving element array.

The dimensional compression unit 120 dimensionally compresses the multidimensional data input to the input unit 110 to generate dimensionally compressed data having a smaller number of dimensions than the multidimensional data. Specifically, the dimensional compression unit 120 may generate the dimensionally compressed data by dimensionally compressing the multidimensional data using a nonlinear method such as t-distributed Stochastic Neighbor Embedding (t-SNE) or Uniform Manifold Approximation and Projection (UMAP). For example, the dimensional compression unit 120 may dimensionally compress the multidimensional data to two dimensions or three dimensions.

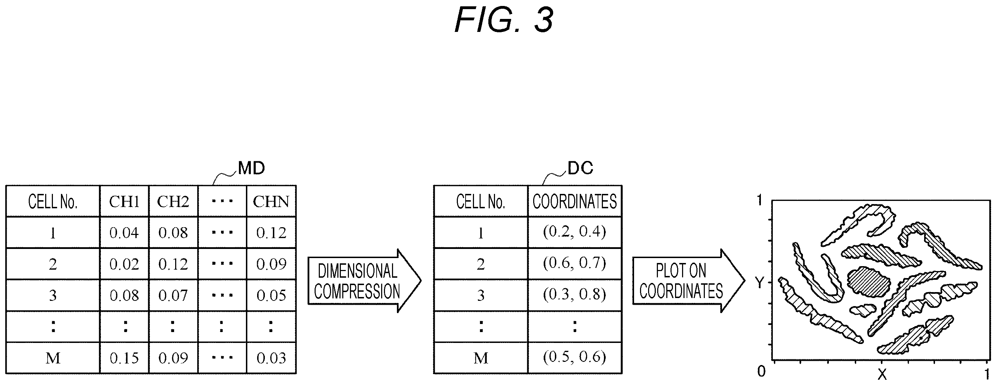

Here, dimensional compression by the dimensional compression unit 120 will be described more specifically with reference to Fig. 3. Fig. 3 is an explanatory diagram illustrating an example of multidimensional data and dimensionally compressed data.

As illustrated in Fig. 3, multidimensional data MD is, for example, data regarding light intensity emitted from each of M cells and received by each of N light receiving elements (channels: CH). That is, the multidimensional data MD is M pieces of N-dimensional (for example, 20 dimensions or the like) data. The multidimensional data MD may be raw data output from each of the N light receiving elements, or may be data normalized after fluorescence correction.

The dimensional compression unit 120 generates M pieces of two-dimensional dimensionally compressed data DC by dimensionally compressing the multidimensional data MD by a nonlinear method such as t-SNE or UMAP, for example. The dimensionally compressed data DC can be used as coordinate data for plotting M cells in a two-dimensional coordinate space such that similar ones are arranged close and dissimilar ones are arranged far. With this arrangement, since the dimensionally compressed data DC plotted on the two-dimensional coordinate space is a collection of subsets according to a type or characteristic of the cell, it is possible to easily visualize what kind of cell population is included in the M cells.

The learning unit 130 constructs a learning model by machine learning with a correspondence relationship between the multidimensional data and the dimensionally compressed data generated by the dimensional compression unit 120 as a teacher.

For example, since a dimensional compression method such as t-SNE, UMAP, and the like performs nonlinear conversion in a dimensional compression process, a dimensional compression result changes every time the dimensional compression is performed, and reproducibility is low. Specifically, in the dimensional compression method such as t-SNE, UMAP, and the like, even in a case where the same multidimensional data is input, a distribution of subsets in the dimensional compression result may change every time the dimensional compression is performed. Therefore, in a case where the multidimensional data is dimensionally compressed by t-SNE, UMAP, and the like, it is difficult to compare dimensionally compressed data between different samples, and thus, for example, it is difficult to find an unknown cell population and the like.

The learning unit 130 performs machine learning with one of the dimensional compression processes from the multidimensional data to the dimensionally compressed data by the dimensional compression unit 120 as a teacher. Specifically, the learning unit 130 performs machine learning using the multidimensional data and the dimensionally compressed data generated from the multidimensional data in the dimensional compression process as a teacher. With this arrangement, the learning unit 130 can construct, by machine learning, the learning model to which the dimensionally compressed data corresponding to the input multidimensional data is output by inputting the multidimensional data. That is, the learning unit 130 can construct the learning model that reproduces the dimensional compression process of generating the dimensionally compressed data used for machine learning from the multidimensional data.

Therefore, the learning model constructed by the learning unit 130 can generate the dimensionally compressed data from the multidimensional data with high reproducibility. In such a case, in the dimensionally compressed data generated through the learning model, since reproducibility of the distribution of subsets in the dimensional compression result is high, each of the subsets can be more easily specified. Furthermore, since the dimensionally compressed data generated through the learning model can be easily compared between samples due to the characteristics described above, an unknown cell population can be more easily found.

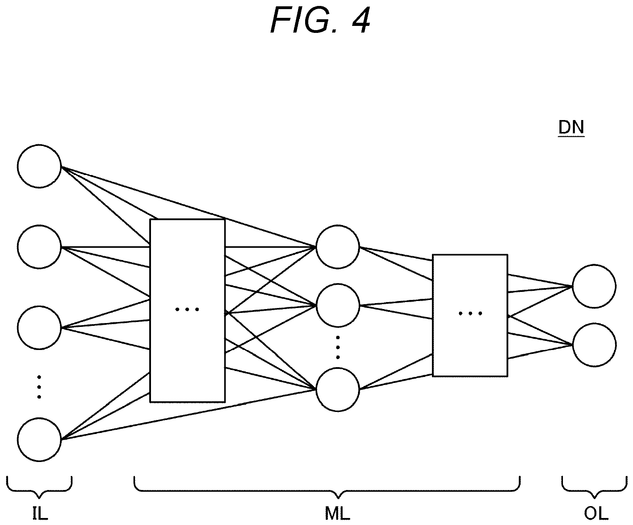

Here, the learning model constructed by the learning unit 130 will be described more specifically with reference to Fig. 4. Fig. 4 is an explanatory diagram illustrating an example of the learning model constructed by the learning unit 130.

As illustrated in Fig. 4, the learning unit 130 may construct the learning model using a neural network DN including an input layer IL, two or more intermediate layers ML, and an output layer OL.

The number of nodes of the input layer IL is the same as the number of dimensions (for example, 20 dimensions) of the multidimensional data, and the number of nodes of the output layer OL is the same as the number of dimensions (for example, two dimensions) of the dimensionally compressed data. The number of nodes of each layer of the intermediate layer ML is set to the number (for example, 15, 10, 5, etc.) between the number of nodes of the input layer IL and the number of nodes of the output layer OL so that the number of nodes gradually decreases from the input layer IL to the output layer OL.

In the neural network DN described above, data of each dimension of the multidimensional data is applied to each node of the input layer IL, and data of each dimension of the dimensionally compressed data is applied to each node of the output layer OL. For example, in the multidimensional data and the dimensionally compressed data illustrated in Fig. 3, the data regarding the light intensity received by each of the N light receiving elements (channels: CH) is applied to each node of the input layer IL, and the coordinate data in the two-dimensional coordinate space is applied to each node of the output layer OL. The learning unit 130 can construct a learning model that reproduces the dimensional compression process by optimizing a network structure and weighting in the neural network DN to which the data described above is applied.

However, the learning unit 130 may construct the learning model using another machine learning method other than the neural network DN. For example, the learning unit 130 can construct a learning model using any method as long as it is supervised machine learning having recursiveness.

The dimensional compression unit 120 and the learning unit 130 described above may be provided on a server or a cloud outside the information processing apparatus 100. For example, the information processing apparatus 100 may cause the dimensional compression unit 120 on the server or the cloud to generate dimensionally compressed data by transmitting multidimensional data to the server or the cloud via the network. Furthermore, the information processing apparatus 100 may receive, via the network, a learning model constructed by causing the learning unit 130 on the server or the cloud to perform machine learning on a correspondence relationship between the multidimensional data and the dimensionally compressed data.

The learning model storage unit 140 stores the learning model constructed by the learning unit 130. Specifically, the learning model storage unit 140 may store, as the learning model, the neural network DN whose network structure and weighting are optimized by machine learning by the learning unit 130. The learning model storage unit 140 may include, for example, a magnetic storage device such as a hard disk drive (HDD), a semiconductor storage device, an optical storage device, or a magneto-optical storage device.

The analysis unit 150 estimates the dimensionally compressed data corresponding to the multidimensional data input to the input unit 110 using the learning model constructed by the learning unit 130. For example, in a case where the learning model is constructed by the neural network DN illustrated in Fig. 4, the analysis unit 150 may estimate data output from the output layer OL when the multidimensional data is input to the input layer IL of the neural network DN as dimensionally compressed data corresponding to the multidimensional data. Since the analysis unit 150 can reproduce the same dimensional compression process by the dimensional compression unit 120 by using the learning model constructed by the learning unit 130, it is possible to estimate the dimensionally compressed data corresponding to the multidimensional data with high reproducibility.

The output unit 160 is a device capable of presenting the dimensionally compressed data estimated by the analysis unit 150 to a user. The output unit 160 may be, for example, a display device such as a liquid crystal display (LCD), a plasma display panel (PDP), an organic light emitting diode (OLED) display, a hologram, or a projector, or may be a printing device such as a printer device. The output unit 160 may output the estimated dimensionally compressed data as a scatter diagram plotted on a two-dimensional or three-dimensional coordinate space.

Alternatively, the output unit 160 may be an external output port that outputs the dimensionally compressed data to an external device capable of presenting the dimensionally compressed data to the user. For example, the output unit 160 may be a connection port such as a USB port, an IEEE 1394 port, or an SCSI port capable of transmitting the dimensionally compressed data to the outside. With this arrangement, the output unit 160 can output the dimensionally compressed data to the external display device or printing device, and can cause the display device or printing device to present the dimensionally compressed data to the user.

The information processing apparatus 100 having the above configuration can construct a learning model by causing machine learning of a correspondence relationship between multidimensional data obtained by the flow cytometer 10 and the like and dimensionally compressed data obtained by dimensionally compressing the multidimensional data. With this arrangement, the information processing apparatus 100 can estimate the dimensionally compressed data corresponding to the multidimensional data by using the constructed learning model and without using the nonlinear dimensional compression method. Furthermore, since the constructed learning model can reproduce the same dimensional compression process, it has high reproducibility and can return the same output for the same input. Therefore, since the information processing apparatus 100 can obtain the dimensionally compressed data corresponding to the multidimensional data with high reproducibility, analysis between samples can be more easily performed.

### (1.3. Operation example of information processing apparatus)

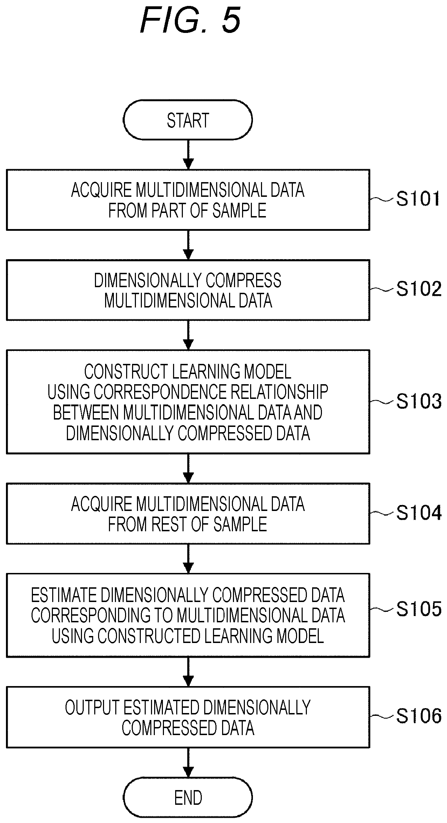

Next, an operation example of the information processing apparatus 100 according to the present embodiment will be described with reference to Fig. 5. Fig. 5 is a flowchart illustrating an example of an operation flow of the information processing apparatus 100 according to the present embodiment.

As shown in Fig. 5, first, multidimensional data is acquired by measuring a part of a sample by an analysis apparatus such as the flow cytometer 10 and the like (S101). The acquired multidimensional data is data including information regarding fluorescence intensity measured by the photodetector 14 of the flow cytometer 10. The multidimensional data acquired by the analysis apparatus is input to the information processing apparatus 100 via the input unit 110.

Next, the multidimensional data is dimensionally compressed by the dimensional compression unit 120 using a dimensional compression method such as t-SNE or UMAP to generate dimensionally compressed data (S102).

Subsequently, the learning unit 130 performs machine learning using a correspondence relationship between the multidimensional data acquired in step S101 and the dimensionally compressed data dimensionally compressed in step S102 as a teacher to construct a learning model (S103). For example, the learning unit 130 may construct the learning model by optimizing a network structure and weighting of a neural network DN including two or more intermediate layers ML, in which the multidimensional data is applied to an input layer IL, and in which the dimensionally compressed data is applied to an output layer OL. The constructed learning model is stored in, for example, the learning model storage unit 140.

Thereafter, multidimensional data is acquired by measuring the rest of the sample by the analysis apparatus (S104). Subsequently, dimensionally compressed data corresponding to the multidimensional data acquired in step S104 is estimated by the analysis unit 150 using the constructed learning model (S105). For example, in a case where the learning model is constructed by the neural network DN, the analysis unit 150 may estimate an output of the output layer OL when the multidimensional data acquired in step S104 is input to the input layer IL as the dimensionally compressed data corresponding to the multidimensional data.

Subsequently, the estimated dimensionally compressed data is presented to a user via the output unit 160 (S106). Therefore, the information processing apparatus 100 can estimate two-dimensional or three-dimensional dimensionally compressed data from the multidimensional data measured by the analysis apparatus using the constructed learning model. Since the two-dimensional or three-dimensional dimensionally compressed data can be visually easily understood by being plotted on a coordinate space, the user can intuitively understand a distribution of subsets of biologically derived particles (for example, cells or the like) measured by the analysis apparatus.

### (1.4. Example of dimensionally compressed data)

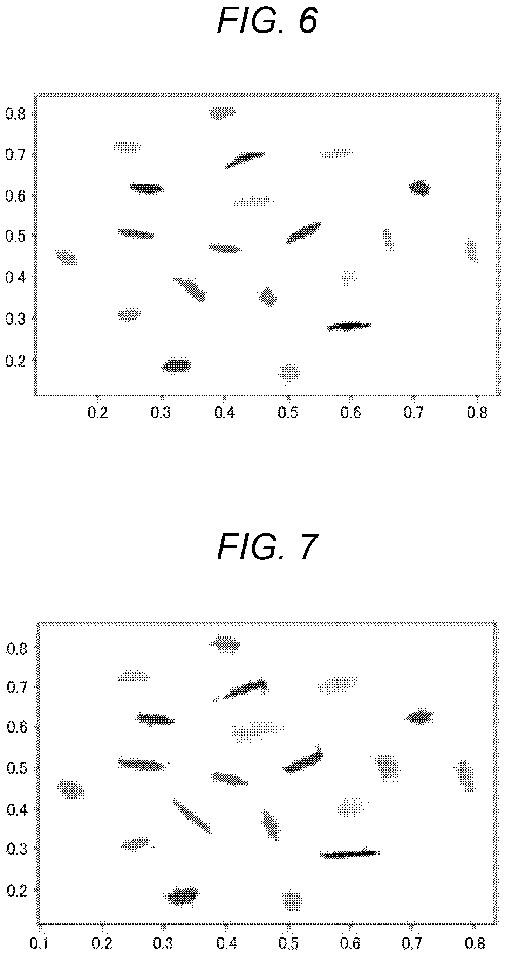

Next, an example of the dimensionally compressed data in the information processing apparatus according to the present embodiment will be described with reference to Figs. 6 to 8.

First, 20-dimensional multidimensional data imitating a measurement result of the flow cytometer was generated by a simulator. Specifically, measurement data (multidimensional data) of a total of 10000 cell populations each including 500 cells single stained with 20 different fluorescent dyes was generated. That is, the generated measurement data is a total of 10000 pieces of 20-dimensional multidimensional data.

Next, out of the 10000 multidimensional data, a total of 8000 multidimensional data each including 400 cells of 20 types of single stained cells were dimensionally compressed by UMAP to generate 8000 pieces of dimensionally compressed data. Fig. 6 illustrates a result of plotting dimensionally compressed data dimensionally compressed by UMAP on a two-dimensional coordinate space.

Furthermore, a learning model was constructed by performing machine learning with a correspondence relationship between the 8000 pieces of multidimensional data described above and the dimensionally compressed data described above by UMAP as a teacher. Specifically, using a neural network in which the number of nodes of an input layer is 20, the number of nodes of an output layer is 2, and the number of nodes of three intermediate layers is 15, 10, and 5 in order from the input layer side, machine learning was performed by applying the multidimensional data to the input layer and applying the dimensionally compressed data to the output layer, and a learning model was constructed. Subsequently, the multidimensional data used for the machine learning was input to the learning model constructed above, and the dimensionally compressed data was output from the output layer. Fig. 7 illustrates a result of plotting the output dimensionally compressed data on a two-dimensional coordinate space.

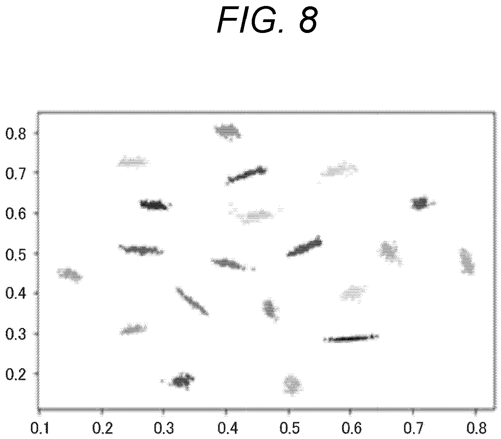

Moreover, a total of 2000 pieces of multidimensional data, which are the remainder obtained by removing the 8000 pieces of multidimensional data described above from the 10000 pieces of multidimensional data and each of which includes 100 cells of 20 types of single stained cells, were input to the learning model constructed above, thereby outputting dimensionally compressed data from the output layer. Fig. 8 illustrates a result of plotting the output dimensionally compressed data on a two-dimensional coordinate space.

As illustrated in Figs. 6 and 7, it can be seen that the information processing apparatus according to the present embodiment can reproduce a machine-learned dimensional compression process with high accuracy by performing machine learning of the dimensional compression process by UMAP. Furthermore, as illustrated in Figs. 7 and 8, it can be seen that the information processing apparatus according to the present embodiment can obtain similar dimensionally compressed data with high accuracy even in a case where multidimensional data that has not been used as a teacher among the same sample is input.

Therefore, the information processing apparatus according to the present embodiment can reproduce the same dimensional compression process with high accuracy by constructing the learning model in which the dimensional compression process including the nonlinear transformation such as UMAP is machine-learned. Furthermore, the information processing apparatus according to the present embodiment can obtain the dimensionally compressed data having high reproducibility of a distribution of subsets in a plurality of samples having a similar tendency, and thus can more easily compare the dimensionally compressed data among the plurality of samples.

### <2. Second embodiment>

### (2.1. Configuration example of information processing apparatus)

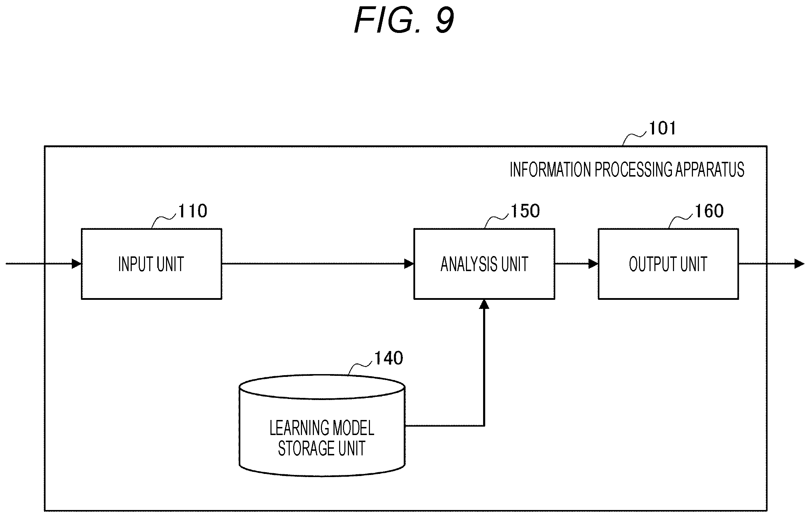

Next, an information processing apparatus according to a second embodiment of the present disclosure will be described with reference to Fig. 9. Fig. 9 is a block diagram illustrating a functional configuration of an information processing apparatus 101 according to the present embodiment. The information processing apparatus according to the present embodiment can estimate dimensionally compressed data at high speed even for new multidimensional data by using the learning model constructed by the information processing apparatus 100 according to the first embodiment.

As illustrated in Fig. 9, the information processing apparatus 101 includes, for example, an input unit 110, a learning model storage unit 140, an analysis unit 150, and an output unit 160.

Since the input unit 110, the analysis unit 150, and the output unit 160 have configurations substantially similar to those described in the information processing apparatus 100 according to the first embodiment, description thereof will be omitted here.

The learning model storage unit 140 stores a learning model for estimating dimensionally compressed data from multidimensional data. Specifically, similarly to the first embodiment, the learning model storage unit 140 may store a learning model obtained by performing machine learning of a dimensional compression process such as UMAP using a neural network including an input layer IL, two or more intermediate layers ML, and an output layer OL. In the learning model stored in the learning model storage unit 140, for example, machine learning is performed by the information processing apparatus 100 and the like according to the first embodiment, and a network structure and weighting are optimized. Therefore, similarly to the information processing apparatus 100 according to the first embodiment, the analysis unit 150 in a subsequent stage can estimate dimensionally compressed data corresponding to multidimensional data acquired by the input unit 110.

Note that the learning model storage unit 140 may be provided in a server or a cloud outside the information processing apparatus 101. For example, the information processing apparatus 101 may estimate the dimensionally compressed data corresponding to the multidimensional data by referring to the learning model stored in the learning model storage unit 140 on the server or the cloud via the network.

According to the information processing apparatus 101 having the above configuration, it is possible to analyze a measurement result of the flow cytometer 10 or the like in a shorter time by using the learning model in which the network structure and weighting have already been optimized by machine learning. Furthermore, since the information processing apparatus 101 can omit time required for an arithmetic operation for constructing the learning model, it is possible to suppress deterioration of a sample to be measured with the lapse of time.

### (2.2. Operation example of information processing apparatus)

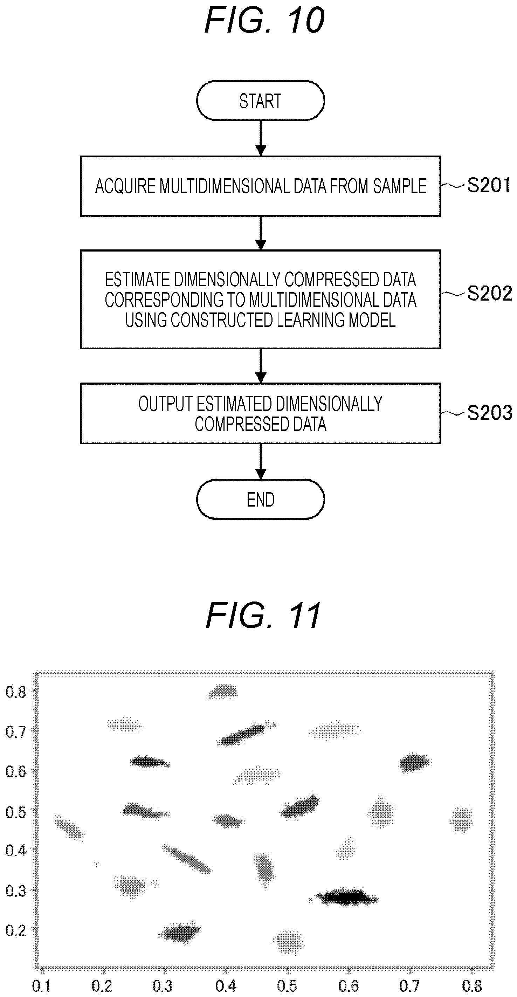

Next, an operation example of the information processing apparatus 101 according to the present embodiment will be described with reference to Fig. 10. Fig. 10 is a flowchart illustrating an example of an operation flow of the information processing apparatus 101 according to the present embodiment.

As shown in Fig. 10, first, multidimensional data is acquired by measuring a sample by an analysis apparatus such as the flow cytometer 10 and the like (S201). The acquired multidimensional data is data including information regarding fluorescence intensity measured by the photodetector 14 of the flow cytometer 10. The multidimensional data acquired by the analysis apparatus is input to the information processing apparatus 101 via the input unit 110.

Next, the analysis unit 150 estimates dimensionally compressed data corresponding to the multidimensional data using a learning model stored in the learning model storage unit 140 (S202). The learning model is, for example, a neural network including an input layer, two or more intermediate layers, and an output layer, and obtained by machine learning a dimensional compression process such as t-SNE or UMAP. For example, the analysis unit 150 may estimate an output of an output layer OL when the multidimensional data acquired in step S201 is input to an input layer IL of the learning model as the dimensionally compressed data corresponding to the multidimensional data.

The estimated dimensionally compressed data is presented to a user via the output unit 160 (S203). Therefore, the user can plot and confirm the multidimensional data measured by the analysis apparatus on two-dimensional or three-dimensional spatial coordinates that are easily visually understood. Therefore, the information processing apparatus 101 can make the user understand a distribution of various populations included in the sample more intuitively.

### (2.3. Example of dimensionally compressed data)

Next, an example of the dimensionally compressed data in the information processing apparatus according to the present embodiment will be described with reference to Figs. 11 to 13.

First, measurement data (multidimensional data) of a total of 10000 cell populations each including 500 cells single stained with 20 different fluorescent dyes was generated by a simulator in a manner similar to (1.4. Example of dimensionally compressed data). However, the generated measurement data has a similar tendency but is not the same as the measurement data generated in (1.4. Example of dimensionally compressed data) by changing noise to be added.

Next, the dimensionally compressed data was output from the output layer by inputting the generated 10000 pieces of multidimensional data to the learning model constructed by (1.4. Example of dimensionally compressed data). Fig. 11 illustrates a result of plotting the output dimensionally compressed data on a two-dimensional coordinate space.

As illustrated in Fig. 11, it can be seen that the information processing apparatus according to the present embodiment can obtain almost the same dimensionally compressed data as the dimensionally compressed data as a teacher (the dimensionally compressed data illustrated in Fig. 7) even in a case where multidimensional data having a similar tendency but not the same is input to the learning model. Therefore, it can be seen that, as long as the samples have the similar tendency, the information processing apparatus according to the present embodiment can estimate the dimensionally compressed data from the multidimensional data using the already constructed learning model and without constructing the learning model again.

Next, measurement data (multidimensional data) of a total of 9000 cell populations each including 500 cells single stained with 18 different fluorescent dyes was generated by the simulator. Dimensionally compressed data was generated by dimensionally compressing the generated 9000 pieces of multidimensional data with UMAP, and machine learning was performed with a correspondence relationship between the 9000 pieces of multidimensional data and the dimensionally compressed data as a teacher, thereby constructing a learning model. A neural network in which the number of nodes of the input layer is 20, the number of nodes of the output layer is 2, and the number of nodes of the three intermediate layers is 15, 10, and 5 in order from the input layer side was used as the learning model.

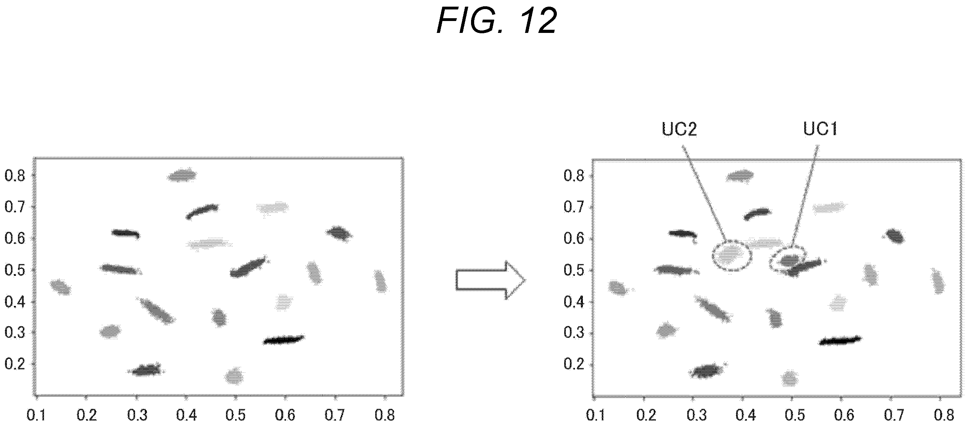

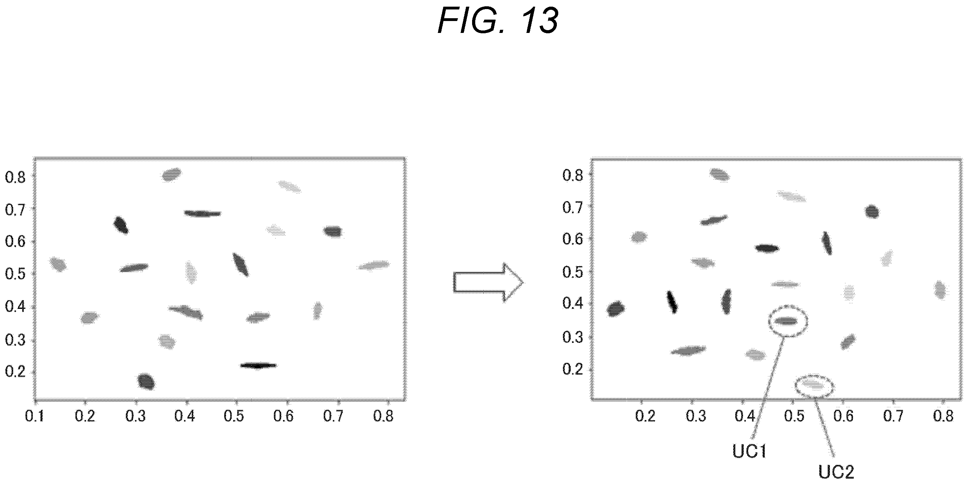

The dimensionally compressed data was output from the output layer by inputting the multidimensional data used for the machine learning to the constructed learning model. The left of Fig. 12 illustrates a result of plotting the output dimensionally compressed data on a two-dimensional coordinate space. Furthermore, the left of Fig. 13 illustrates a result of dimensionally compressing the same 9000 multidimensional data by UMAP and plotting the generated dimensionally compressed data on a two-dimensional coordinate space.

Moreover, measurement data (multidimensional data) of a total of 10000 cell populations each including 500 cells single stained with 20 fluorescent dyes including 18 fluorescent dyes described above was generated by the simulator. Next, the generated 10000 pieces of multidimensional data were input to the learning model constructed above (learning model in which the dimensionally compressed data illustrated on the left of Fig. 12 was generated), so that the dimensionally compressed data was output from the output layer. The right of Fig. 12 illustrates a result of plotting the output dimensionally compressed data on a two-dimensional coordinate space. Furthermore, the right of Fig. 13 illustrates a result of dimensionally compressing the same 10000 multidimensional data by UMAP and plotting the generated dimensionally compressed data on a two-dimensional coordinate space.

The plotting results of the dimensionally compressed data illustrated on the right of Figs. 12 and 13 include new sets UC1 and UC2 derived from two cell populations not included in the multidimensional data and the dimensionally compressed data as teacher. However, since the dimensionally compressed data generated by the dimensional compression by UMAP illustrated on the right of Fig. 13 has low reproducibility and a distribution of each cell population is changed, it is difficult to determine the new sets UC1 and UC2 by a distribution shape and arrangement of the cell populations. On the other hand, the dimensionally compressed data generated by the estimation by the learning model illustrated on the right of Fig. 12 has high reproducibility, and a distribution of each cell population is substantially unchanged, so that the new sets UC1 and UC2 can be easily determined by a distribution shape and arrangement of the cell populations.

Therefore, the information processing apparatus according to the present embodiment can estimate the dimensionally compressed data corresponding to the multidimensional data by using the learning model obtained by machine learning the dimensional compression process from the multidimensional data to the dimensionally compressed data. With this arrangement, since the information processing apparatus according to the present embodiment has high reproducibility of the dimensionally compressed data, comparison of the dimensionally compressed data between different samples is facilitated, and an unknown cell population can be easily identified.

Such comparison between the measurement data using the dimensionally compressed data can be used, for example, for comparison between a sample (for example, blood or the like) collected from a patient and a sample collected from a healthy person. With this arrangement, it is possible to easily identify a cell population specifically expressed in the patient. Furthermore, the comparison between the measurement data using the dimensionally compressed data can be used for comparison between samples collected from the same patient on different dates, comparison between measurement data of a sample actually collected from a patient and model data, or the like. Moreover, the comparison between the measurement data using the dimensionally compressed data can be used to compare cell samples cultured under different conditions. With this arrangement, since it is possible to easily detect a change in the cell sample due to the presence of a different drug or the presence or absence of a drug, it is possible to easily determine response of the drug to the cell sample.

### <3. Third embodiment>

### (3.1. Configuration example of particle analysis system)

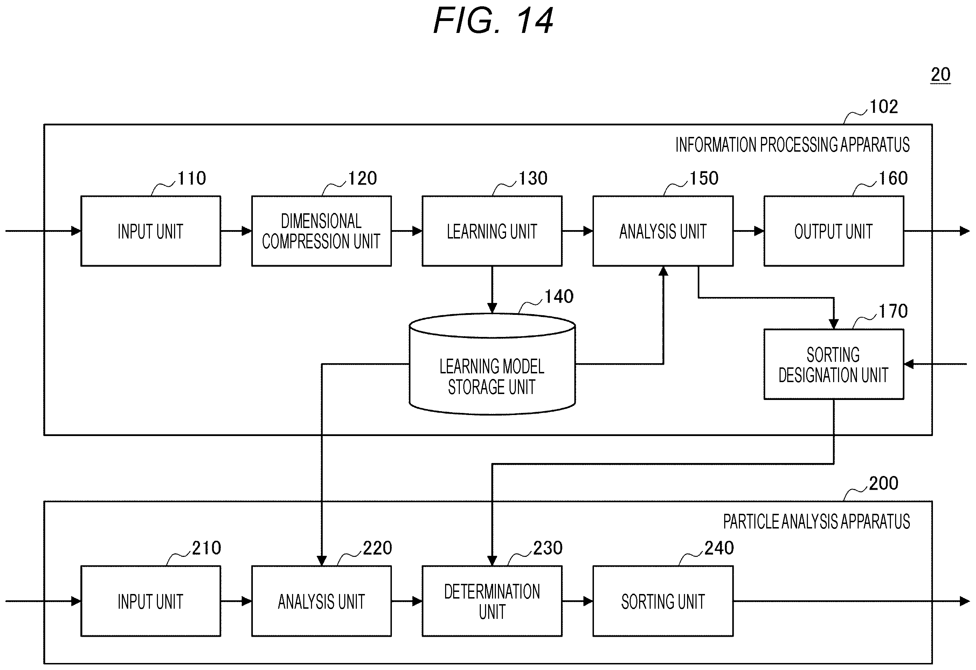

Next, a particle analysis system according to a third embodiment of the present disclosure will be described with reference to Fig. 14. Fig. 14 is a block diagram illustrating a functional configuration of a particle analysis system 20 according to the present embodiment. The particle analysis system 20 according to the present embodiment can quickly determine a group to be sorted among measurement targets S by using the machine-learned learning model described in the information processing apparatus 100 according to the first embodiment. For example, the particle analysis system 20 according to the present embodiment is a so-called cell sorter capable of selectively sorting a group to be sorted among the measurement targets S.

As illustrated in Fig. 14, the particle analysis system 20 includes an information processing apparatus 102 and a particle analysis apparatus 200.

The information processing apparatus 102 includes an input unit 110, a dimensional compression unit 120, a learning unit 130, a learning model storage unit 140, an analysis unit 150, an output unit 160, and a sorting designation unit 170.

The input unit 110, the dimensional compression unit 120, the learning unit 130, the learning model storage unit 140, the analysis unit 150, and the output unit 160 have configurations substantially similar to those described in the information processing apparatus 100 according to the first embodiment, and thus description thereof is omitted here.

Dimensionally compressed data output from the output unit 160 is visually recognized by a user as, for example, a scatter diagram plotted on a two-dimensional or three-dimensional coordinate space. The user can confirm the number of groups included in the measurement target S, variance in the groups, a distance between the groups, and the like from the scatter diagram obtained by plotting the dimensionally compressed data.

The sorting designation unit 170 designates a range of the measurement target S to be sorted by the particle analysis apparatus 200 on the basis of an input from the user. For example, the sorting designation unit 170 may designate the range of the measurement target S to be sorted by designating a coordinate range of the dimensionally compressed data plotted in the two-dimensional or three-dimensional coordinate space on the basis of the input from the user.

The particle analysis apparatus 200 includes an input unit 210, an analysis unit 220, a determination unit 230, and a sorting unit 240. The particle analysis apparatus 200 can determine whether or not the measurement target S is a sorting target by estimating dimensionally compressed data corresponding to multidimensional data of the measurement target S in real time using the machine-learned learning model, and sort the measurement target S that is the sorting target.

The input unit 210 acquires measurement data of the measurement target S from the photodetector 14 and the like. Specifically, the input unit 210 acquires measurement data of each particle of the measurement target S as multidimensional data. For example, the input unit 210 may acquire measurement data regarding fluorescence intensity for every wavelength region of the particles of the measurement target S as multidimensional data.

The analysis unit 220 estimates dimensionally compressed data corresponding to the multidimensional data input to the input unit 210 using the learning model stored in the learning model storage unit 140. In the particle analysis system 20 according to the present embodiment, since the analysis unit 220 estimates the dimensionally compressed data using the same learning model as that of the analysis unit 150 of the information processing apparatus 102, the particle analysis apparatus 200 can obtain dimensionally compressed data similar to that of the information processing apparatus 102. The learning model stored in the learning model storage unit 140 may be a learning model constructed using a part of the measurement target S including the sorting target, or may be a learning model constructed in advance using another sample and the like.

Note that the dimensionally compressed data estimated by the analysis unit 220 may be presented to the user in real time via the output unit 160.
Therefore, the output unit 160 can plot the dimensionally compressed data estimated by the analysis unit 220 in a two-dimensional or three-dimensional coordinate space together with the range designated as the sorting target and present the data to the user. With this arrangement, since the user can observe the dimensionally compressed data plotted in the two-dimensional or three-dimensional coordinate space in real time, it is possible to perform sorting while confirming that the measurement target S in the range designated as the sorting target is sorted.

Furthermore, the learning model used in the analysis unit 220 may be implemented on rewritable hardware such as a field-programmable gate array (FPGA). For example, a network structure and weighting of a neural network DN, which is a learning model, may be implemented in hardware such as FPGA. Since the neural network DN constructed by the technology according to the present disclosure has a relatively simple and small structure, it can be implemented on hardware such as FPGA.

In such a case, the analysis unit 220 can estimate the dimensionally compressed data corresponding to the multidimensional data at a higher speed than when software is executed by an arithmetic device such as CPU. With this arrangement, the particle analysis apparatus 200 can further shorten the time from the acquisition of the multidimensional data from the measurement target S to the determination of whether or not the measurement target S is a sorting target. Therefore, the particle analysis apparatus 200 can more reliably sort the measurement target S determined to be the sorting target.

The determination unit 230 determines whether or not the measurement target S is a sorting target on the basis of the dimensionally compressed data estimated by the analysis unit 220. Specifically, in a case where coordinates indicated by the dimensionally compressed data estimated by the analysis unit 220 are included in the range designated by the sorting designation unit 170, the determination unit 230 may determine that the measurement target S is the sorting target.

The sorting unit 240 sorts the measurement target S determined to be the sorting target by the determination unit 230 from other measurement targets S and collects the sorted measurement target S in a sorting well or tube. Specifically, the sorting unit 240 charges droplets including the measurement target S determined to be the sorting target, and passes the charged droplets between a pair of deflection plates to which voltage is applied. Therefore, the sorting unit 240 can deflect and separate the droplets including the measurement target S determined to be the sorting target from droplets including the other measurement targets S by electrostatic attractive force. The sorted droplets including the measurement target S are collected in, for example, a sorting well or tube.

In the particle analysis system 20 according to the present embodiment, dimensionally compressed data is estimated from multidimensional data using a learning model obtained by machine learning of a specific dimensional compression process. At this time, since the analysis unit 150 of the information processing apparatus 102 and the analysis unit 220 of the particle analysis apparatus 200 use the same learning model, the particle analysis system 20 can obtain similar dimensionally compressed data. Therefore, the determination unit 230 can determine whether or not the measurement target S is a sorting target based on whether or not the dimensionally compressed data estimated by the analysis unit 220 is included in a range of the sorting target set for the dimensionally compressed data estimated by the analysis unit 150.

Furthermore, in the particle analysis system 20 according to the present embodiment, since the analysis unit 150 and the analysis unit 220 use a learning model constructed in advance by machine learning, it is possible to quickly obtain dimensionally compressed data in a short time. Therefore, the particle analysis system 20 according to the present embodiment can quickly determine whether or not the measurement target S is a sorting target even under time constraints from measurement to sorting.

The particle analysis system 20 having the above configuration can more quickly sort a group of known measurement targets S by a real-time property of calculation for estimating the dimensionally compressed data. Furthermore, the particle analysis system 20 can quickly sort a group of unknown measurement targets S by the real-time property of the calculation for estimating the dimensionally compressed data and high reproducibility of the dimensionally compressed data.

### (3.2. Operation example of particle analysis system)

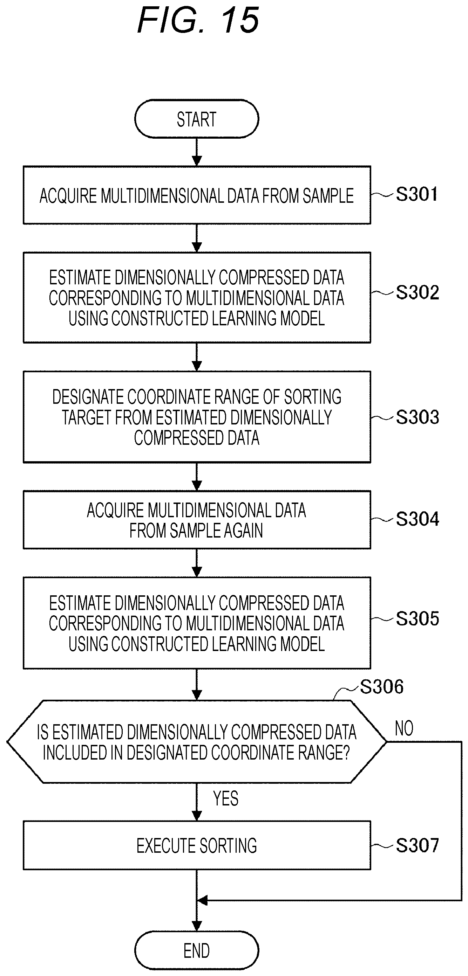

Next, an operation example of the particle analysis system 20 according to the present embodiment will be described with reference to Fig. 15. Fig. 15 is a flowchart illustrating an example of an operation flow of the particle analysis system 20 according to the present embodiment.

As shown in Fig. 15, first, multidimensional data is acquired by measuring a sample by an analysis apparatus such as the flow cytometer 10 and the like (S301). The acquired multidimensional data is data including information regarding fluorescence intensity measured by the photodetector 14 of the flow cytometer 10. The multidimensional data acquired by the analysis apparatus is input to the information processing apparatus 101 via the input unit 110.

Next, the analysis unit 150 estimates dimensionally compressed data corresponding to the multidimensional data using a learning model stored in the learning model storage unit 140 (S302). The learning model is, for example, a neural network including an input layer, two or more intermediate layers, and an output layer, and obtained by machine learning a dimensional compression process such as t-SNE or UMAP. For example, the analysis unit 150 may estimate an output of an output layer OL when the multidimensional data acquired in step S301 is input to an input layer IL of the learning model as the dimensionally compressed data corresponding to the multidimensional data.

The dimensionally compressed data estimated by the analysis unit 150 is presented to a user via the output unit 160. Therefore, the user can designate a coordinate range of a measurement target S to be sorted on the basis of the output dimensionally compressed data (S303). For example, the coordinate range of the measurement target S to be sorted is input to, for example, the sorting designation unit 170.

Thereafter, by measuring the measurement target S again, multidimensional data of the measurement target S is acquired via the input unit 210 (S304). Next, the analysis unit 220 estimates dimensionally compressed data corresponding to the multidimensional data using the learning model stored in the learning model storage unit 140 (S305).

Subsequently, the determination unit 230 determines whether or not the dimensionally compressed data estimated by the analysis unit 220 is included in the coordinate range of the measurement target S to be sorted (S306). In a case where the dimensionally compressed data estimated by the analysis unit 220 is included in the coordinate range of the measurement target S to be sorted (S306/Yes), the determination unit 230 determines that the measurement target S is the sorting target. Therefore, the measurement target S determined to be the sorting target is sorted by the sorting unit 240 (S307).

On the other hand, in a case where the dimensionally compressed data estimated by the analysis unit 220 is not included in the coordinate range of the measurement target S to be sorted (S306/No), the determination unit 230 determines that the measurement target S is not the sorting target. Therefore, the measurement target S determined not to be the sorting target is collected in a waste liquid tank and the like.

According to the above operation, the particle analysis system 20 according to the present embodiment can sort the measurement target S included in the range designated as the sorting target by the user with high accuracy.

### <4. Modifications>

In each of the above-described embodiments, the measurement data of the flow cytometer 10 is exemplified as the multidimensional data, but the technology according to the present disclosure is not limited to the above. The technology according to the present disclosure can also be applied to a fluorescence imaging apparatus that measures multidimensional data such as a fluorescence spectrum and the like using an imaging element (a two-dimensional image sensor). That is, the information processing apparatus described in each of the above embodiments can also estimate dimensionally compressed data corresponding to the multidimensional data measured by the fluorescence imaging apparatus.

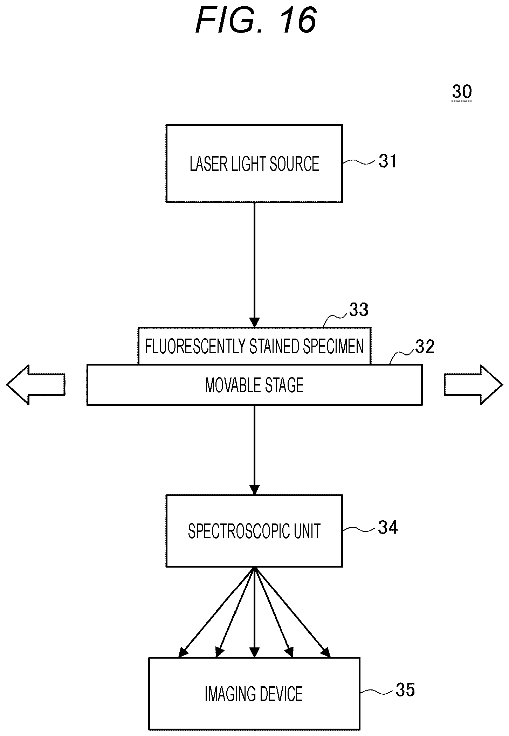

Fig. 16 illustrates a schematic configuration example of a fluorescence imaging apparatus. Fig. 16 is a schematic diagram illustrating a schematic configuration of the fluorescence imaging apparatus.

As illustrated in Fig. 16, a fluorescence imaging apparatus 30 includes, for example, a laser light source 31, a movable stage 32 on which a fluorescently stained specimen 33 is placed, a spectroscopic unit 34, and an imaging element 35.

For example, the laser light source 31 emits laser light having a wavelength capable of exciting a fluorescent dye used for dyeing the fluorescently stained specimen 33. In a case where a plurality of fluorescent dyes is used for dying the fluorescently stained specimen 33, a plurality of laser light sources 31 may be provided so that laser light corresponding to an excitation wavelength of each of the plurality of fluorescent dyes can be emitted. For example, the laser light source 31 may be a semiconductor laser light source. The laser light emitted from the laser light source 31 may be pulse light or continuous light.

The movable stage 32 is a stage on which a measurement target such as the fluorescently stained specimen 33 is placed. The movable stage 32 can move horizontally so that the laser light emitted from the laser light source 31 scans the fluorescently stained specimen 33 two-dimensionally.

The fluorescently stained specimen 33 is, for example, made from a specimen or a tissue sample collected from a human body for the purpose of pathological diagnosis or the like, and is a specimen stained using a plurality of fluorescent dyes. The fluorescently stained specimen 33 includes a large number of measurement targets S such as cells constituting the collected tissue. The fluorescently stained specimen 33 is horizontally moved by the movable stage 32, so that the large number of measurement targets S included in the fluorescently stained specimen 33 can be sequentially irradiated with the laser light emitted from the laser light source 31.

The spectroscopic unit 34 is an optical element that spectrally disperses fluorescence emitted from the measurement target S irradiated with the laser light into a continuous spectrum. The fluorescence dispersed by the spectroscopic unit 34 can be detected by the imaging element 35 at a subsequent stage. The spectroscopic unit 34 may be, for example, a prism or a grating.

Alternatively, the spectroscopic unit 34 may be an optical element that spectrally disperses fluorescence emitted from the measurement target S irradiated with the laser light for every predetermined detection wavelength region. In such a case, the spectroscopic unit 34 includes, for example, at least one or more dichroic mirrors or optical filters, and can disperse the fluorescence from the measurement target S into light in a predetermined detection wavelength region by an optical member such as a dichroic mirror, an optical filter, and the like.

The imaging element 35 is a two-dimensional image sensor in which light receiving elements such as a CCD sensor or a CMOS sensor are two-dimensionally arranged.

The imaging element 35 outputs an image signal by receiving fluorescence emitted from the measurement target S included in the fluorescently stained specimen 33 and dispersed by the spectroscopic unit 34 by each of the two-dimensionally arranged light receiving elements. Since the fluorescence emitted from the measurement target S irradiated with the laser light is dispersed by the spectroscopic unit 34, the imaging element 35 can receive fluorescence in a wavelength region different for every region and output an image signal corresponding to received fluorescence intensity.

In the fluorescence imaging apparatus 30 having the above configuration, the fluorescence emitted from the measurement target S included in the fluorescently stained specimen 33 is dispersed by the spectroscopic unit 34 and then detected by each of the light receiving elements of the imaging element 35. Therefore, the image signal output from the imaging element 35 is multidimensional data. With this arrangement, similarly to the measurement data of the flow cytometer 10 described above, the information processing apparatus described in each of the above embodiments can estimate a lower-dimensional dimensionally compressed data corresponding to the multidimensional data measured by the fluorescence imaging apparatus 30 using the machine-learned learning model.

The multidimensional data input to the information processing apparatus according to each of the above-described embodiments may be an image signal associated with position information acquired by the imaging element 35. Furthermore, in a case where an image of the fluorescently stained specimen 33 is subjected to segmentation processing, the multidimensional data input to the information processing apparatus may be image data associated with a region obtained by the segmentation processing.

Note that the technology according to the present disclosure can be applied not only to a fluorescence imaging apparatus that acquires fluorescence information but also to a general microscope apparatus that acquires an image of a biological specimen with an imaging element. For example, in a case where each section of a biological specimen including a plurality of sections is subjected to staining processing such as hematoxylin-eosin (HE) staining or immunohistochemical staining to acquire an image of each stained section, image data acquired from the plurality of images in association with position information on the biological specimen can be used as multidimensional data. Furthermore, in a case where a plurality of images of the biological specimen is subjected to segmentation processing, image data associated with a region obtained by the segmentation processing can be used as multidimensional data.

### <5. Hardware configuration example>

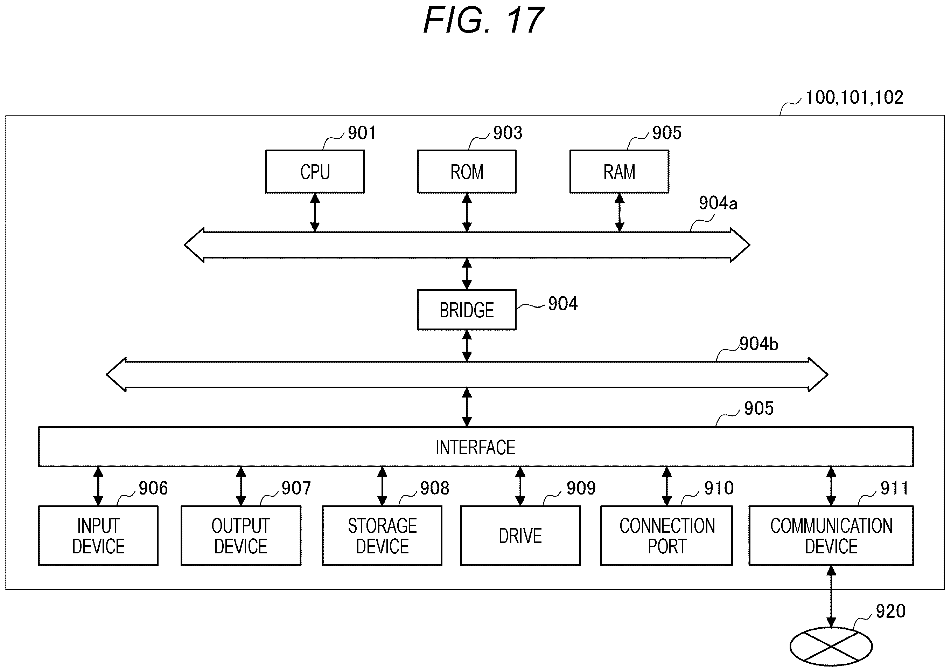

Moreover, a hardware configuration of the information processing apparatus 100, 101, 102 according to the present embodiment will be described with reference to Fig. 17. Fig. 17 is a block diagram illustrating a hardware configuration example of the information processing apparatus 100, 101, 102 according to the present embodiment.

Functions of the information processing apparatus 100, 101, 102 according to the present embodiment are realized by cooperation of software and hardware described below. For example, functions of the dimensional compression unit 120, the learning unit 130, the analysis unit 150, and the sorting designation unit 170 described above may be executed by a CPU 901.

As illustrated in Fig. 17, the information processing apparatus 100, 101, 102 includes the central processing unit (CPU) 901, a read only memory (ROM) 902, and a random access memory (RAM) 903.

Furthermore, the information processing apparatus 100, 101, 102 may further include a host bus 904a, a bridge 904, an external bus 904b, an interface 905, an input device 906, an output device 907, a storage device 908, a drive 909, a connection port 910, and a communication device 911. Moreover, the information processing apparatus 100, 101, 102 may include another arithmetic processing circuit such as a digital signal processor (DSP) or an application specific integrated circuit (ASIC) instead of the CPU 901 or together with the CPU 901.

The CPU 901 functions as an arithmetic processing device or a control device, and controls an overall operation of the information processing apparatus 100, 101, 102 according to various programs recorded on a removable recording medium attached to the ROM 902, the RAM 903, the storage device 908, or the drive 909. The ROM 902 stores programs, calculation parameters, and the like used by the CPU 901. The RAM 903 temporarily stores a program used in execution by the CPU 901, and parameters used during the execution, and the like.

The CPU 901, the ROM 902, and the RAM 903 are mutually connected by the host bus 904a including an internal bus such as a CPU bus. Moreover, the host bus 904a is connected to the external bus 904b such as a peripheral component interconnect/interface (PCI) bus via the bridge 904.

The input device 906 is, for example, a device that receives an input from a user, such as a mouse, a keyboard, a touch panel, a button, a switch, or a lever. The input device 906 may be a microphone or the like that detects voice of the user. Furthermore, the input device 906 may be, for example, a remote control device using infrared rays or other radio waves, or may be an external connection device corresponding to an operation of the information processing apparatus 100, 101, 102.

The input device 906 further includes an input control circuit that outputs an input signal generated on the basis of information input by the user to the CPU 901. The user can input various types of data or instruct a processing operation to the information processing apparatus 100, 101, 102 by operating the input device 906.

The output device 907 is a device capable of visually or aurally presenting information acquired or generated by the information processing apparatus 100, 101, 102 to the user. The output device 907 may be, for example, a display device such as a liquid crystal display (LCD), a plasma display panel (PDP), an organic light emitting diode (OLED) display, a hologram, or a projector. Furthermore, the output device 907 may be a sound output device such as a speaker or a headphone, or may be a printing device such as a printer device. The output device 907 may output information obtained by processing by the information processing apparatus 100, 101, 102 as a video such as a text or an image, or sound such as voice or audio. The output device 907 may function as, for example, the output unit 160 described above.

The storage device 908 is a data storage device configured as an example of a storage unit of the information processing apparatus 100, 101, 102. The storage device 908 may include, for example, a magnetic storage device such as a hard disk drive (HDD), a semiconductor storage device, an optical storage device, a magneto-optical storage device, or the like. The storage device 908 can store programs and various data executed by the CPU 901, various data acquired from the outside, or the like. The storage device 908 may function as, for example, the learning model storage unit 140 described above.

The drive 909 is a reading or writing device of a removable recording medium such as a magnetic disk, an optical disk, a magneto-optical disk, or a semiconductor memory, and is built in or externally attached to the information processing apparatus 100, 101, 102. For example, the drive 909 can read information recorded in the attached removable recording medium and output the information to the RAM 903. Furthermore, the drive 909 can write information to the attached removable recording medium.

The connection port 910 is a port for directly connecting an external connection device to the information processing apparatus 100, 101, 102. The connection port 910 may be, for example, a universal serial bus (USB) port, an IEEE 1394 port, a small computer system interface (SCSI) port, or the like. Furthermore, the connection port 910 may be an RS-232C port, an optical audio terminal, or a high-definition multimedia interface (HDMI (registered trademark)) port, or the like. The connection port 910 is connected with the external connection device, so that various data can be transmitted and received between the information processing apparatus 100, 101, 102 and the external connection device. The connection port 910 may function as, for example, the input unit 110 or the output unit 160 described above.

The communication device 911 is, for example, a communication interface including a communication device or the like for connecting to a communication network 920. The communication device 911 may be, for example, a communication card for a wired or wireless local area network (LAN), Bluetooth (registered trademark), or a wireless USB (WUSB). Furthermore, the communication device 911 may be a router for optical communication, a router for asymmetric digital subscriber line (ADSL), a modem for various kinds of communication, or the like. The communication device 911 may function as, for example, the input unit 110 or the output unit 160 described above.

For example, the communication device 911 can transmit and receive signals and the like to and from the Internet or another communication device by using a predetermined protocol such as TCP/IP The communication network 920 connected to the communication device 911 is a network connected by wire or wirelessly, and may be, for example, an Internet communication network, a home LAN, an infrared communication network, a radio wave communication network, a satellite communication network, or the like.

Note that it is also possible to create a program for causing hardware such as the CPU 901, the ROM 902, and the RAM 903 built in the computer to exhibit functions equivalent to those of the information processing apparatus 100, 101, 102 described above. Furthermore, a computer-readable recording medium in which the program is recorded can also be provided.

The preferred embodiments of the present disclosure have been described above in detail with reference to the accompanying drawings, but the technical scope of the present disclosure is not limited to such examples.

Furthermore, the effects described in the present specification are merely exemplary or illustrative, and not restrictive. That is, the technology according to the present disclosure can exhibit other effects apparent to those skilled in the art from the description of the present specification, in addition to the effects described above or instead of the effects described above.

### REFERENCE SIGNS LIST

- 10: Flow cytometer
- 11: Laser light source
- 12: Flow cell
- 13: Detection optical unit
- 14: Photodetector
- 20: Particle analysis system
- 100, 101, 102: Information processing apparatus
- 110: Input unit
- 120: Dimensional compression unit
- 130: Learning unit
- 140: Learning model storage unit
- 150: Analysis unit
- 160: Output unit
- 170: Sorting designation unit
- 200: Particle analysis apparatus
- 210: Input unit
- 220: Analysis unit
- 230: Determination unit
- 240: Sorting unit
- S: Measurement target
- DN: Neural network
- IL: Input layer
- ML: Intermediate layer
- OL: Output layer

## Claims

1. A particle analysis system (20) comprising:
a particle analysis apparatus (200) including a light receiving unit that receives light emitted from a biologically derived particle; and
an information processing apparatus (100) including a dimensional compression unit (120) that generates dimensionally compressed data by dimensionally compressing multidimensional data regarding the light output from the light receiving unit, and a learning unit (130) that constructs a learning model by machine learning with a correspondence relationship between the dimensionally compressed data and the multidimensional data as a teacher.

2. The particle analysis system according to claim 1, wherein the dimensional compression unit dimensionally compresses the multidimensional data using a nonlinear method.

3. The particle analysis system according to claim 1, wherein the dimensional compression unit dimensionally compresses the multidimensional data to two dimensions or three dimensions.

4. The particle analysis system according to claim 3, wherein the dimensionally compressed data is coordinate data in a two-dimensional or three-dimensional coordinate space.

5. The particle analysis system according to claim 1, wherein the learning unit constructs the learning model using a neural network including an input layer, two or more intermediate layers, and an output layer.

6. The particle analysis system according to claim 5, wherein a number of nodes of the input layer is same as a number of dimensions of the multidimensional data, and a number of nodes of the output layer is same as a number of dimensions of the dimensionally compressed data.

7. The particle analysis system according to claim 6, wherein the learning model is the neural network in which a network structure and weighting are optimized by applying the multidimensional data to the input layer and applying the dimensionally compressed data to the output layer.

8. The particle analysis system according to claim 1, wherein the information processing apparatus further includes an analysis unit that estimates the dimensionally compressed data corresponding to the multidimensional data using the learning model constructed by the learning unit.

9. The particle analysis system according to claim 1, wherein the multidimensional data includes data regarding light intensity of fluorescence emitted from the biologically derived particle.

10. The particle analysis system according to claim 1, wherein the particle analysis apparatus further includes a sorting unit that sorts the biologically derived particle to be a sorting target.

11. The particle analysis system according to claim 10, wherein the particle analysis apparatus further includes a determination unit that determines whether or not the biologically derived particle is the sorting target on a basis of the dimensionally compressed data corresponding to the multidimensional data estimated by the learning model constructed by the learning unit.

12. The particle analysis system according to claim 11, wherein the learning model constructed by the learning unit is implemented in hardware in the particle analysis apparatus.

13. The particle analysis system according to claim 1, further comprising an output unit that presents, to a user, the dimensionally compressed data corresponding to the multidimensional data estimated by the learning model constructed by the learning unit.

## Patentansprüche

1. Partikelanalysesystem (20), umfassend:
eine Partikelanalyseeinrichtung (200), einschließlich einer Lichtempfangseinheit, die Licht empfängt, das von einem biologisch abgeleiteten Partikel emittiert wird; und
eine Informationsverarbeitungseinrichtung (100), einschließlich einer Dimensionskompressionseinheit (120), die dimensional komprimierte Daten durch dimensionales Komprimieren mehrdimensionaler Daten bezüglich des von der Lichtempfangseinheit ausgegebenen Lichts erzeugt, und einer Lerneinheit (130), die ein Lernmodell durch maschinelles Lernen mit einer Korrespondenzbeziehung zwischen den dimensional komprimierten Daten und den mehrdimensionalen Daten als einen Lehrer konstruiert.

2. Partikelanalysesystem nach Anspruch 1, wobei die Dimensionskompressionseinheit die mehrdimensionalen Daten unter Verwendung eines nichtlinearen Verfahrens dimensional komprimiert.

3. Partikelanalysesystem nach Anspruch 1, wobei die Dimensionskompressionseinheit die mehrdimensionalen Daten auf zwei Dimensionen oder drei Dimensionen dimensional komprimiert.

4. Partikelanalysesystem nach Anspruch 3, wobei die dimensional komprimierten Daten Koordinatendaten in einem zweidimensionalen oder dreidimensionalen Koordinatenraum sind.

5. Partikelanalysesystem nach Anspruch 1, wobei die Lerneinheit das Lernmodell unter Verwendung eines neuronalen Netzwerks konstruiert, das eine Eingabeschicht, zwei oder mehr Zwischenschichten und eine Ausgabeschicht einschließt.

6. Partikelanalysesystem nach Anspruch 5, wobei eine Anzahl von Knoten der Eingabeschicht dieselbe wie eine Anzahl von Dimensionen der mehrdimensionalen Daten ist und eine Anzahl von Knoten der Ausgabeschicht dieselbe wie eine Anzahl von Dimensionen der dimensional komprimierten Daten ist.

7. Partikelanalysesystem nach Anspruch 6, wobei das Lernmodell das neuronale Netzwerk ist, in dem eine Netzwerkstruktur und eine Gewichtung durch Anwenden der mehrdimensionalen Daten auf die Eingabeschicht und Anwenden der dimensional komprimierten Daten auf die Ausgabeschicht optimiert sind.

8. Partikelanalysesystem nach Anspruch 1, wobei die Informationsverarbeitungseinrichtung ferner eine Analyseeinheit einschließt, die die dimensional komprimierten Daten, die den mehrdimensionalen Daten entsprechen, unter Verwendung des durch die Lerneinheit konstruierten Lernmodells schätzt.

9. Partikelanalysesystem nach Anspruch 1, wobei die mehrdimensionalen Daten Daten bezüglich einer Lichtintensität einer Fluoreszenz einschließen, die von dem biologisch abgeleiteten Partikel emittiert wird.

10. Partikelanalysesystem nach Anspruch 1, wobei die Partikelanalyseeinrichtung ferner eine Sortiereinheit einschließt, die das biologisch abgeleitete Partikel sortiert, um ein Sortierziel zu sein.

11. Partikelanalysesystem nach Anspruch 10, wobei die Partikelanalyseeinrichtung ferner eine Bestimmungseinheit einschließt, die auf einer Basis der dimensional komprimierten Daten, die den mehrdimensionalen Daten entsprechen, die durch das durch die Lerneinheit konstruierte Lernmodell geschätzt werden, bestimmt, ob das biologisch abgeleitete Partikel das Sortierziel ist oder nicht.

12. Partikelanalysesystem nach Anspruch 11, wobei das durch die Lerneinheit konstruierte Lernmodell in einer Hardware in der Partikelanalyseeinrichtung implementiert ist.

13. Partikelanalysesystem nach Anspruch 1, ferner umfassend eine Ausgabeeinheit, die einem Benutzer die dimensional komprimierten Daten präsentiert, die den mehrdimensionalen Daten entsprechen, die durch das durch die Lerneinheit konstruierte Lernmodell geschätzt werden.

## Revendications

1. Système d'analyse de particules (20) comprenant :
un appareil d'analyse de particules (200) comportant une unité de réception de lumière qui reçoit de la lumière émise par une particule d'origine biologique ; et
un appareil de traitement d'informations (100) comportant une unité de compression dimensionnelle (120) qui génère des données compressées dimensionnellement en compressant dimensionnellement des données multidimensionnelles concernant la lumière délivrée en sortie par l'unité de réception de lumière, et une unité d'apprentissage (130) qui élabore un modèle d'apprentissage par apprentissage automatique grâce à une relation de correspondance entre les données compressées dimensionnellement et les données multidimensionnelles servant d'enseignant.

2. Système d'analyse de particules selon la revendication 1, dans lequel l'unité de compression dimensionnelle compresse dimensionnellement les données multidimensionnelles à l'aide d'un procédé non linéaire.

3. Système d'analyse de particules selon la revendication 1, dans lequel l'unité de compression dimensionnelle compresse dimensionnellement les données multidimensionnelles en deux dimensions ou trois dimensions.

4. Système d'analyse de particules selon la revendication 3, dans lequel les données compressées dimensionnellement sont des données de coordonnées dans un espace de coordonnées bidimensionnel ou tridimensionnel.

5. Système d'analyse de particules selon la revendication 1, dans lequel l'unité d'apprentissage élabore le modèle d'apprentissage à l'aide d'un réseau neuronal comportant une couche d'entrée, deux ou plusieurs couches intermédiaires, et une couche de sortie.

6. Système d'analyse de particules selon la revendication 5, dans lequel un nombre de nœuds de la couche d'entrée est identique à un nombre de dimensions des données multidimensionnelles, et un nombre de nœuds de la couche de sortie est identique à un nombre de dimensions des données compressées dimensionnellement.

7. Système d'analyse de particules selon la revendication 6, dans lequel le modèle d'apprentissage est le réseau neuronal dans lequel une structure et une pondération de réseau sont optimisées en appliquant les données multidimensionnelles à la couche d'entrée et en appliquant les données compressées dimensionnellement à la couche de sortie.

8. Système d'analyse de particules selon la revendication 1, dans lequel l'appareil de traitement d'informations comporte en outre une unité d'analyse qui estime les données compressées dimensionnellement correspondant aux données multidimensionnelles à l'aide du modèle d'apprentissage élaboré par l'unité d'apprentissage.

9. Système d'analyse de particules selon la revendication 1, dans lequel les données multidimensionnelles comportent des données concernant l'intensité lumineuse de fluorescence émise par la particule d'origine biologique.

10. Système d'analyse de particules selon la revendication 1, dans lequel l'appareil d'analyse de particules comporte en outre une unité de tri qui trie la particule d'origine biologique qui doit servir de cible de tri.

11. Système d'analyse de particules selon la revendication 10, dans lequel l'appareil d'analyse de particules comporte en outre une unité de détermination qui détermine si la particule d'origine biologique est ou non la cible de tri sur la base des données compressées dimensionnellement correspondant aux données multidimensionnelles estimées par le modèle d'apprentissage élaboré par l'unité d'apprentissage.

12. Système d'analyse de particules selon la revendication 11, dans lequel le modèle d'apprentissage élaboré par l'unité d'apprentissage est mis en œuvre dans un matériel de l'appareil d'analyse de particules.

13. Système d'analyse de particules selon la revendication 1, comprenant en outre une unité de sortie qui présente, à un utilisateur, les données compressées dimensionnellement correspondant aux données multidimensionnelles estimées par le modèle d'apprentissage élaboré par l'unité d'apprentissage.
